# EUROPÄISCHE PATENTSCHRIFT

(11) **EP 1 650 093 B1**
(45) Veröffentlichungstag und Bekanntmachung des Hinweises auf die Patenterteilung: **15.08.2007**
(21) Anmeldenummer: 05017935.7
(22) Anmeldetag: 18.08.2005
(51) Int. Cl.: B60T 8/26, B62L 3/08

(54) **Integralbremse für ein Motorrad**
Integral braking system for motorcycle
Système de freinage intégrale pour motocycle

(30) Priorität: 20.10.2004 DE 102004051119
(43) Veröffentlichungstag der Anmeldung: 26.04.2006
(73) Patentinhaber: Bayerische Motoren Werke Aktiengesellschaft, 80809 München (DE); Continental Teves AG & Co. oHG, 60488 Frankfurt (DE)
(72) Erfinder: Hamm, Markus, 85737 Ismaning (DE); Woywod, Jürgen, 64546 Möhrfelden (DE)
(74) Vertreter: Rothkopf, Ferdinand

(56) Entgegenhaltungen:
- EP-A- 1 277 635
- PATENT ABSTRACTS OF JAPAN Bd. 2000, Nr. 06, 22. September 2000 (2000-09-22) -& JP 2000 071963 A (NIPPON ABS LTD), 7. März 2000 (2000-03-07)

## Beschreibung

Die Erfindung betrifft eine Integralbremse für ein Motorrad, umfassend einen Fußbremshebel, einen mit dem Fußbremshebel betätigbaren Fußbremszylinder, eine auf das Hinterrad einwirkende erste hydraulische Bremseinrichtung, eine den Fußbremszylinder mit der ersten hydraulischen Bremseinrichtung verbindende erste Leitung, eine auf das Vorderrad einwirkende zweite hydraulische Bremseinrichtung, eine den Fußbremszylinder mit der zweiten hydraulischen Bremseinrichtung verbindende zweite Leitung, einen den Betätigungsdruck der ersten hydraulischen Bremseinrichtung messenden ersten Drucksensor, einen den vom Fußbremszylinder erzeugten Druck messenden zweiten Drucksensor, einen Handbremshebel, einen mit dem Handbremshebel betätigbaren Handbremszylinder, eine auf das Vorderrad einwirkende dritte hydraulische Bremseinrichtung, eine den Handbremszylinder mit der dritten hydraulischen Bremseinrichtung verbindende dritte Leitung, einen der ersten Leitung zugeordneten Druckmodulator, einen der zweiten Leitung zugeordneten Druckmodulator, und ein elektronisches Steuergerät, in dem eine optimale Verteilung der auf das Vorder- und Hinterrad einwirkenden Bremskräfte gespeichert ist.

Eine derartige Integralbremse, bei der durch wahlweise Betätigung des Hand- oder Fußbremshebels sowohl eine der beiden auf das Vorderrad einwirkenden hydraulischen Bremseinrichtungen als auch die auf das Hinterrad einwirkende hydraulische Bremseinrichtung betätigt werden, ist in der EP 1 277 635 A beschrieben. Wenn bei dieser bekannten Integralbremse nach Einleitung eines Bremsvorgangs mit dem Handbremshebel zusätzlich der Fußbremshebel betätigt wird oder umgekehrt, dann wird in einer der beiden auf das Vorderrad einwirkenden hydraulischen Bremseinrichtungen eine zusätzliche Bremskraft erzeugt. Diese zusätzliche Bremskraft wird in dem elektronischen Steuergerät aber nicht berücksichtigt, so daß keine optimale Bremskraftverteilung erreicht wird.

Der Erfindung liegt die Aufgabe zugrunde, die bekannte Integralbremse dahingehend zu verbessern, daß auch bei gleichzeitiger Betätigung des Hand- und des Fußbremshebels die optimale Verteilung der auf das Vorder- und Hinterrad einwirkenden Bremskräfte gewährleistet ist.

Die Lösung dieser Aufgabe ist im kennzeichnenden Teil des Patentanspruchs 1 angegeben.

Zweckmäßige Weiterbildungen der Erfindung ergeben sich aus den Unteransprüchen.

Zwei Ausführungsbeispiele der Erfindung sind in den Zeichnungen schematisch dargestellt und werden nachfolgend näher erläutert. Es zeigt:
Fig. 1 eine schematische Darstellung einer ersten Ausführungsform einer Integralbremse für ein Motorrad,
Fig. 2 ein Diagramm, das den Zusammenhang zwischen dem mit dem Handbremshebel erzeugten hydraulischen Druck und dem dadurch erzielten Verzögerungsfaktor veranschaulicht,
Fig. 3 ein Diagramm, das den Zusammenhang zwischen dem mit dem Fußbremshebel erzeugten hydraulischen Druck und dem dadurch erzielten Verzögerungsfaktor veranschaulicht,
Fig. 4 ein Diagramm, das die Verteilung der Bremskraft auf das Vorder- bzw. Hinterrad veranschaulicht, und
Fig. 5 ein zweites Ausführungsbeispiel einer Integralbremse für ein Motorrad.

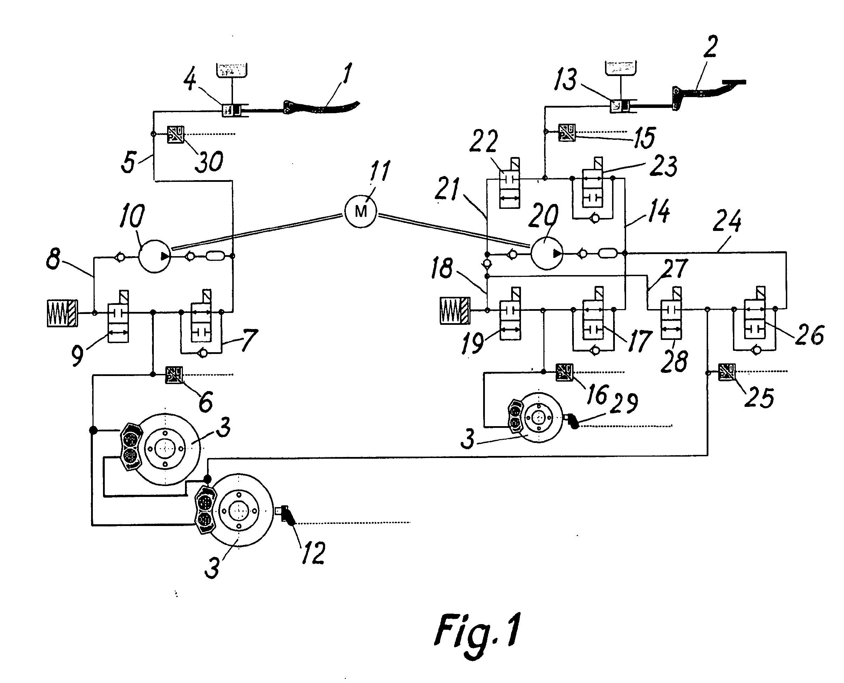

Die in Fig. 1 schematisch dargestellte Integralbremse für ein Motorrad umfaßt einen Handbremshebel 1 zur Betätigung einer auf das Vorderrad einwirkenden ersten hydraulischen Bremseinrichtung und einen Fußbremshebel 2 zur Betätigung einer auf das Hinterrad einwirkenden zweiten hydraulischen Bremseinrichtung und einer auf das Vorderrad einwirkenden dritten Bremseinrichtung. Während am Hinterrad des Motorrades nur eine Bremsscheibe 3 befestigt ist, sind am Vorderrad zwei Bremsscheiben 3 befestigt. Jeder dieser Bremsscheiben 3 ist ein Bremssattel zugeordnet, in dem eine oder mehrere Druckkammern ausgebildet sind. Der Handbremshebel 1 wirkt auf einen Handbremszylinder 4, der über eine Leitung 5 mit den dem Vorderrad zugeordneten beiden Bremssätteln verbunden ist. Aus Symmetriegründen sind in den beiden vorderen Bremssätteln jeweils drei Druckkammern ausgebildet, und die Leitung 5 ist mit den beiden außenliegenden Druckkammern verbunden. In der Leitung 5 sind ein den mit dem Handbremszylinder 4 erzeugten Druck messender Drucksensor 30 und ein den Betätigungsdruck der vorderen hydraulischen Bremseinrichtung messender Drucksensor 6 angeordnet. Ein Drehzahlsensor 12 mißt die Drehzahl des Vorderrades. In die Leitung 5 ist ein Druckmodulator integriert, der den in der Leitung 5 herrschenden Druck verringert, sobald das Vorderrad blockiert. Dieser Druckmodulator umfaßt ein in der Leitung 5 angeordnetes Einlaßventil 7 und eine das Einlaßventil 7 umgehende Leitung 8, wobei in der Umgehungsleitung 8 ein Auslaßventil 9 und eine Pumpe 10 angeordnet sind. Die Pumpe 10 steht mit einem Elektromotor 11 in Antriebsverbindung.

Der Fußbremshebel 2 ist mit einem Fußbremszylinder 13 gekuppelt, der über eine Leitung 14 mit der auf das Hinterrad einwirkenden hydraulischen Bremseinrichtung verbunden ist. Genauer gesagt, die Leitung 14 ist mit der bzw. den Druckkammern verbunden, die in dem der hinteren Bremsscheibe 3 zugeordneten Bremssattel ausgebildet sind. In der Leitung 14 sind ein den mit dem Fußbremszylinder 13 erzeugten Druck messender Drucksensor 15 und ein den Betätigungsdruck der hinteren hydraulischen Bremseinrichtung messender Drucksensor 16 angeordnet. In die Leitung 14 ist ein Druckmodulator integriert, der grundsätzlich ähnlich aufgebaut ist wie der in die Leitung 5 integrierte Druckmodulator. Dieser Druckmodulator umfaßt ein in der Leitung 14 angeordnetes Einlaßventil 17 und eine dieses umgehende Leitung 18, in der ein Auslaßventil 19 und eine Pumpe 20 angeordnet sind. Die Pumpe 20 steht mit dem Elektromotor 11 in Antriebsverbindung. Die Pumpe 20 ist über eine Ansaugleitung 21 mit der Leitung 14 verbunden. In der Ansaugleitung 21 ist ein Saugventil 22 angeordnet, und stromabwärts von der Einmündung der Ansaugleitung 21 ist in der Leitung 14 ein Trennventil 23 angeordnet. Eine Leitung 24 ist in dem Bereich zwischen dem Trennventil 23 und dem Einlaßventil 17 an die Leitung 14 angeschlossen. Die Leitung 24 ist mit der mittleren Druckkammer jedes der beiden am Vorderrad befestigten Bremssättel verbunden. In der Leitung 24 ist ein den Betätigungsdruck der auf die vorderen Bremsscheiben 3 einwirkenden Bremseinrichtung messender Drucksensor 25 angeordnet. In die Leitung 24 ist ferner ein Druckmodulator integriert. Dieser Druckmodulator umfaßt ein in der Leitung 24 angeordnetes Einlaßventil 26 und eine dieses umgehende Leitung 27, in der eine Auslaßventil 28 angeordnet ist und die mit der Umgehungsleitung 18 auf der Saugseite der Pumpe 20 verbunden ist.

Ähnlich wie dem Vorderrad ist auch dem Hinterrad ein Drehzahlsensor 29 zugeordnet.

Die beiden Drehzahlsensoren 12 und 29, die vier Drucksensoren 6, 15, 16 und 25, der Elektromotor 11 die Magnetventile 7, 9, 17, 19, 26, 28 der drei Druckmodulatoren und das Saug- und das Trennventil 22, 23 sind mit einem (nicht gezeigten) elektronischen Steuergerät verbunden.

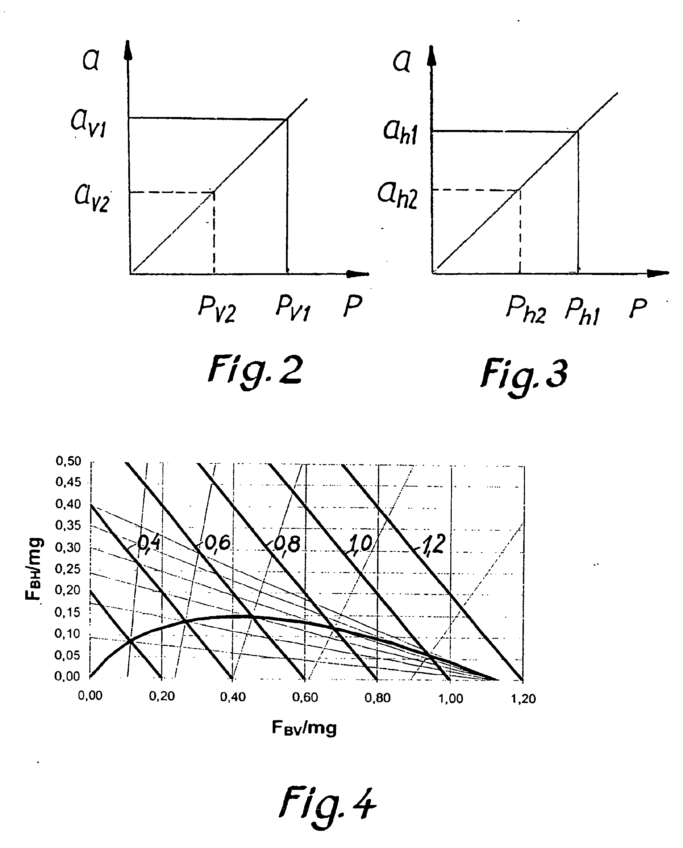

Um eine optimale Verzögerung des Fahrzeugs zu erzielen, ist eine bestimmte Verteilung der auf das Vorder- bzw. Hinterrad aufgebrachten Bremskraft erforderlich. Diese ideale Bremskraftverteilung ist in dem Diagramm nach Fig. 4 dargestellt. Mit zunehmender Bremskraft am Vorderrad steigt auch die optimale Bremskraft am Hinterrad an, um nach Erreichen eines Maximums wieder abzunehmen. Wenn die auf das Vorderrad ausgeübte Bremskraft so groß ist, daß das Hinterrad beginnt abzuheben, dann fällt die auf das Hinterrad ausgeübte Bremskraft auf Null ab. In das Diagramm nach Fig. 4 ist ferner eine Geradenschar eingetragen, die einem bestimmten Verzögerungswert entsprechen. Aus dem Schnittpunkt dieser Geraden mit der Kurve für die ideale Bremskraftverteilung ergibt sich die für die jeweilige Verzögerung optimale vordere bzw. hintere Bremskraft.

Der mit dem Handbremshebel 1 bzw. mit dem Fußbremshebel 2 im Handbremszylinder 4 bzw. im Fußbremszylinder 13 erzeugte Druck entspricht einem bestimmten Verzögerungsfaktor, der mit dem Druck linear ansteigt, wie dies in den Fig. 2 und 3 gezeigt ist. Wenn mit dem Hand- oder Fußbremshebel 1 bzw. 2 gebremst wird, dann kann aufgrund des von den Drucksensoren 30 bzw. 15 gemessenen Druckes der diesem entsprechende Verzögerungsfaktor bestimmt werden, der die gewünschte Verzögerung des Fahrers widerspiegelt. Aus dem Diagramm nach Fig. 4 können die zu diesem Verzögerungsfaktor gehörenden Bremskräfte ermittelt werden, die für eine optimale Verteilung auf das Vorderrad und das Hinterrad des Motorrades aufzubringen sind. Die Diagramme gemäß den Fig. 2, 3 und 4 sind in die elektronische Steuereinrichtung der Integralbremse eingespeichert.

Nachfolgend wird die Arbeitsweise der in der Zeichnung dargestellten Integralbremse erläutert.

Zunächst sei der Fall betrachtet, daß das Motorrad allein durch Betätigung des Handbremshebels gebremst wird. Durch die Betätigung des Handbremshebels 1 wird in der Leitung 5 ein Druck aufgebaut. Aufgrund dieses von dem Drucksensor 30 ermittelten Druckes pᵥ₁ kann aus dem Diagramm nach Fig. 2 der zugehörige Verzögerungsfaktor a ᵥ₁ bestimmt werden. Aufgrund dieses Verzögerungsfaktors a ᵥ₁ kann sodann aus dem Diagramm nach Fig. 4 die für eine solche Verzögerung auf das Hinterrad auszuübende optimale Bremskraft und damit der entsprechende Bremsdruck ermittelt werden. Wie bereits erwähnt, wird die Ermittlung des zur Erzielung einer optimalen Bremskraftverteilung erforderlichen Betätigungsdruckes der dem Hinterrad zugeordneten Bremseinrichtung von dem elektronischen Steuergerät ermittelt. Daraufhin wird der Elektromotor 11 in Gang gesetzt, um die Pumpe 20 anzutreiben. Dabei sind das Saugventil 22 und das Einlaßventil 17 geöffnet, während das Trennventil 23 und das Auslaßventil 19 geschlossen sind. In der Leitung 14 wird daher ein Druck aufgebaut. Wenn der von dem in dieser Leitung angeordneten Drucksensor 16 gemessene Druck dem von dem elektronischen Steuergerät ermittelten Druck entspricht, dann wird die Pumpe 20 abgeschaltet. Die den beiden vorderen Bremsscheiben 3 und der hinteren Bremsscheibe 3 zugeordneten Bremssättel werden daher mit einer Kraft beaufschlagt, die einer optimalen Verteilung der auf das Vorder- und das Hinterrad ausgeübten Bremskraft entspricht. Falls das Vorder- oder Hinterrad blockieren sollte, dann wird über die Pumpe 10 bzw. 20 der in der Leitung 5 bzw. 14 herrschende Betätigungsdruck in bekannter Weise reduziert.

Bei dem vorstehend beschriebenen Bremsvorgang sind das Einlaß- und das Auslaßventil 26 und 28 geschlossen. Um die auf den Handbremshebel 1 auszuübende Kraft zu reduzieren, kann der entsprechende Druckmodulator aber auch aktiviert werden, d. h. das Einlaßventil 26 wird geöffnet, um über die Leitung 24 die den vorderen Bremsscheiben zugeordneten Bremssättel zu unterstützen. In diesem Fall müssen die von den Drucksensoren 6 und 25 gemessenen Drücke addiert werden, und aufgrund des entsprechenden Summenwertes muß aus dem Diagramm nach Fig. 2 der zugehörige Verzögerungsfaktor bestimmt werden. Aus dem Diagramm nach Fig. 4 kann sodann der für eine optimale Bremskraftverteilung erforderliche Betätigungsdruck in der Leitung 14 für die dem Hinterrad zugeordnete Bremseinrichtung ermittelt werden.

Wenn der Fußbremshebel 2 allein betätigt wird, dann wird in den Leitungen 14 und 24 ein Druck pₕ₁ aufgebaut. In analoger Weise wird aufgrund des von dem Drucksensor 15 ermittelten Druckes anhand des Diagramms nach Fig. 3 der entsprechende Verzögerungsfaktor aₕ₁ ermittelt, und aufgrund dieses Verzögerungsfaktors kann anhand von Fig. 4 die entsprechende optimale auf das Vorderrad auszuübende Bremskraft ermittelt werden. Liegt dieser Druck über dem vom Fahrer erzeugten Druck, wird in der Leitung 24 der erforderliche zusätzliche Druck aufgebaut. Zu diesem Zweck wird die Pumpe 20 mit dem Elektromotor 11 angetrieben, das Saugventil 22 wird geöffnet, und das Trennventil 23 wird geschlossen. Wenn der von dem Drucksensor 25 gemessene Druck in der Leitung 24 den vorbestimmten Wert erreicht, kann das Einlaßventil 26 geschlossen werden, und die Pumpe 20 wird abgeschaltet. Falls der in der Leitung 14 herrschende Betätigungsdruck ist als der in der Leitung 24 herrschende Betätigungsdruck, dann muß durch Schließen des Einlaßventils 17 und Öffnen des Aulaßventils 19 mit der Pumpe 20 entsprechend Druck abgebaut werden. Auf analoge Weise kann der Druck in den Leitungen 14 und 24 verringert werden, wenn das Vorder- und/oder das Hinterrad blockiert.

Wenn nach Einleitung eines Bremsvorgangs mit dem Handbremshebels 1 zusätzlich der Fußbremshebel 2 betätigt wird, dann wird von dem Fußbremszylinder 13 ein zusätzlicher Druck pₕ₂ aufgebaut, der mit dem Drucksensor 15 gemessen wird. Anhand von Fig. 3 wird der zu dem gemessenen Druck pₕ₂ gehörige Verzögerungsfaktor aₕ₂ bestimmt und zu dem Verzögerungsfaktor aᵥ₁ addiert, der durch den in der Leitung 5 herrschenden Betätigungsdruck pᵥ₁ definiert ist. Mit dem aus der Summe der Verzögerungsfaktoren aᵥ₁ und aₕ₂ gebildeten neuen Verzögerungsfaktor werden anhand des Diagramms nach Fig. 4 die diesem veränderten Verzögerungsfaktor entsprechenden Bremskräfte ermittelt, die auf das Vorder- bzw. Hinterrad aufzubringen sind. Zur Erzielung dieser Bremskräfte müssen die in den Leitungen 14 und 24 herrschenden Betätigungsdrücke entsprechend erhöht werden. Es kann auch sein, daß der in der Leitung 14 herrschende Druck reduziert werden muß, was davon abhängt, ob man sich links oder rechts von dem aus Fig. 4 ersichtlichen Maximum befindet. Da der in der Leitung 5 herrschende Betätigungsdruck konstant bleibt, wird der Handbremshebel 1 durch die zusätzliche Betätigung des Fußbremshebels 2 nicht beeinflußt. Am Handbremshebel 1 treten daher keinerlei Rückkopplungseffekte auf.

Wenn zuerst die Fußbremse und sodann die Handbremse betätigt wird, dann wird von dem Handbremszylinder 4 in der Leitung 5 ein Druck pᵥ₂ aufgebaut, und es wird eine zusätzliche Bremskraft auf das Vorderrad ausgeübt, und die Verzögerung des Fahrzeugs wird entsprechend vergrößert. Der in der Leitung 5 herrschende Betätigungsdruck wird von dem Drucksensor 6 gemessen, und anhand von Fig. 2 wird der zu diesem Druck pᵥ₂ gehörige Verzögerungsfaktor aᵥ₂ bestimmt. Dieser Verzögerungswert aᵥ₂ wird mit dem durch die Betätigung der Fußbremse definierten Verzögerungsfaktor aₕ₁ addiert und aufgrund des dadurch gebildeten neuen Verzögerungsfaktors werden anhand von Fig. 4 die zugehörigen Werte für die auf das Vorder- bzw. Hinterrad auszuübenden Bremskräfte ermittelt. Da der in der Leitung 5 herrschende Druck vom Fahrer vorgegeben wird, muß die erforderliche Zunahme der auf das Vorderrad einwirkenden Bremskraft durch eine entsprechende Vergrößerung des in der Leitung 24 herrschenden Betriebsdrucks erzielt werden. Von dem elektronischen Steuergerät werden die entsprechenden Druckmodulatoren gesteuert, um die in den Leitungen 24 und 14 herrschenden Betriebsdrücke auf die für die optimale Bremskraftverteilung erforderlichen Werte zu bringen. Da der in der Leitung 5 herrschende Druck durch diese Regelungsvorgänge nicht beeinflußt wird, bleibt auch der Handbremshebel 1 unbeeinflußt, so daß der Fahrer ein normales Bremsgefühl hat.

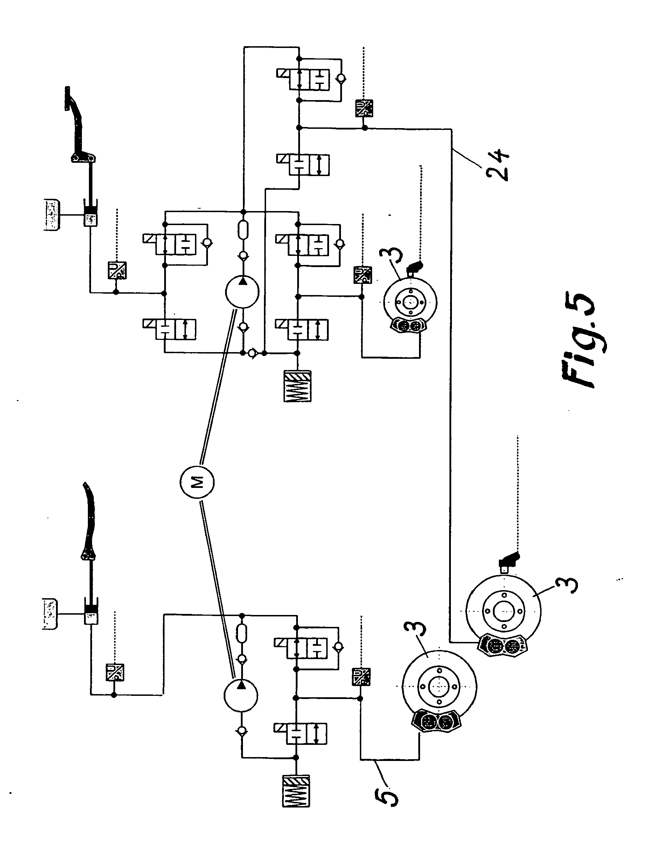

Statt der in Fig. 1 gezeigten Ausführungsform, bei der die vorderen Bremssättel drei Druckkammern haben, können auch konventionelle Bremssättel mit nur einer Druckkammer verwendet werden. Wie in Fig. 5 dargestellt, ist der eine der beiden vorderen Bremssättel mit der Leitung 5 verbunden, wogegen der andere vordere Bremssattel mit der Leitung 24 verbunden ist. Im übrigen ist der Aufbau und die Wirkungsweise der in Fig. 5 gezeigten Integralbremse mit der Ausführungsform nach Fig. 1 identisch.

Alternativ kann statt der idealen (optimalen) Bremskraftverteilung zwischen Vorder- und Hinterrad auch jede andere Verteilung realisiert werden.

Idealerweise wird die Integralbremse wie dargestellt und beschrieben mit fünf Drucksensoren gefahren. Es ist aber grundsätzlich auch möglich, mit vier Drucksensoren 6, 15, 16 und 25 zu fahren und den fehlenden fünften Druck im System durch ein Druckmodell zu errechnen.

### Bezugszeichenliste:

- 1: Handbremshebel
- 2: Fußbremshebel
- 3: Bremsscheibe
- 4: Handbremszylinder
- 5: Leitung
- 6: Drucksensor
- 7: Einlaßventil
- 8: Umgehungsleitung
- 9: Auslaßventil
- 10: Pumpe
- 11: Elektromotor
- 12: Drehzahlsensor
- 13: Fußbremszylinder
- 14: Leitung
- 15: Drucksensor
- 16: Drucksensor
- 17: Einlaßventil
- 18: Umgehungsleitung
- 19: Auslaßventil
- 20: Pumpe
- 21: Ansaugleitung
- 22: Saugventil
- 23: Trennventil
- 24: Leitung
- 25: Drucksensor
- 26: Einlaßventil
- 27: Umgehungsleitung
- 28: Auslaßventil
- 29: Drehzahlsensor
- 30: Drucksensor

## Patentansprüche

1. Integralbremse für ein Motorrad, umfassend
einen Fußbremshebel (2),
einen mit dem Fußbremshebel betätigbaren Fußbremszylinder (13),
eine auf das Hinterrad einwirkende erste hydraulische Bremseinrichtung,
eine den Fußbremszylinder (13) mit der ersten hydraulischen Bremseinrichtung verbindende erste Leitung (14),
eine auf das Vorderrad einwirkende zweite hydraulische Bremseinrichtung,
eine den Fußbremszylinder (13) mit der zweiten hydraulischen Bremseinrichtung verbindende zweite Leitung (24),
einen den Betätigungsdruck der ersten hydraulischen Bremseinrichtung messenden ersten Drucksensor (16),
einen den vom Fußbremszylinder (13) erzeugten Druck messenden zweiten Drucksensor (15),
einen Handbremshebel (1),
einen mit dem Handbremshebel betätigbaren Handbremszylinder (4),
eine auf das Vorderrad einwirkende dritte hydraulische Bremseinrichtung,
eine den Handbremszylinder (4) mit der dritten hydraulischen Bremseinrichtung verbindende dritte Leitung (5),
einen der ersten Leitung (14) zugeordneten Druckmodulator (17, 18, 19, 20),
einen der zweiten Leitung (24) zugeordneten Druckmodulator (26, 27, 28, 20), und
ein elektronisches Steuergerät, in dem eine optimale Verteilung der auf das Vorder- und Hinterrad einwirkenden Bremskräfte gespeichert ist,
**dadurch gekennzeichnet,**
**daß** ein den Betätigungsdruck der dritten hydraulischen Bremseinrichtung messender dritter Drucksensor (6) vorgesehen ist,
**daß** ein den Betätigungsdruck der zweiten hydraulischen Bremseinrichtung messender vierter Drucksensor (25) vorgesehen ist, und
**daß** in dem elektronischen Steuergerät die den mit dem Handbremszylinder (4) oder mit dem Fußbremszylinder (13) erzeugten Drücken entsprechenden theoretischen Verzögerungswerte und die zur Erzielung dieser theoretischen Verzögerungswerte erforderliche optimale Verteilung der auf das Vorder- und Hinterrad einwirkenden Bremskräfte und die hierfür erforderlichen Bremsdrücke gespeichert sind,
wobei das elektronische Steuergerät die beiden Druckmodulatoren entsprechend den von den vier Drucksensoren (6, 15, 16, 25) gelieferten Signalen steuert, um bei einer Betätigung des Handbremshebels (1) oder des Fußbremshebels (2) oder einer gleichzeitigen Betätigung beider Bremshebel (1 und 2) die Betätigungsdrücke der ernsten und zweiten hydraulischen Bremseinrichtungen auf die programmierten Werte zu bringen.

2. Integralbremse nach Anspruch 1, **dadurch gekennzeichnet, daß** der dritten Leitung (5) ebenfalls ein Druckmodulator (7, 8, 9, 10) zugeordnet ist, daß dem Vorder- und Hinterrad jeweils ein Drehzahlsensor (12, 29) zugeordnet ist, und daß das elektronisches Steuergerät die drei Druckmodulatoren entsprechend den von den beiden Drehzahlsensoren gelieferten Signalen steuert, um ein Blockieren des Vorder- oder Hinterrades zu verhindern.

3. Integralbremse nach Anspruch 2, **dadurch gekennzeichnet, daß** die drei Druckmodulatoren ein in der ersten, zweiten und dritten Leitung (14, 24, 5) angeordnetes Einlaßventil (17, 26, 7), eine jedes Einlaßventil umgehende Leitung (18, 27, 8), ein in der Umgehungsleitung angeordnetes Auslaßventil (19, 28, 9) und eine in der Umgehungsleitung zwischen dem Auslaßventil und der ersten, zweiten oder dritten Leitung angeordnete Pumpe (20, 10) umfassen.

4. Integralbremse nach Anspruch 1,2 oder 3, **dadurch gekennzeichnet, daß** am Vorderrad zwei Bremsscheiben befestigt sind, denen jeweils ein Bremssattel zugeordnet ist, der drei Druckkammern aufweist, von denen die beiden äußeren mit der dritten Leitung (5) und die innere mit der zweiten Leitung (24) verbunden sind.

5. Integralbremse nach Anspruch 1, 2 oder 3, **dadurch gekennzeichnet, daß** am Vorderrad zwei Bremsscheiben befestigt sind, denen jeweils ein Bremssattel zugeordnet ist, der mindestens eine Druckkammer aufweist, wobei die Druckkammer(n) des einen Bremssattels mit der dritten Leitung (5) und die Druckkammer(n) des anderen Bremssattels mit der zweiten Leitung (24) verbunden ist bzw. sind.

## Claims

1. Integral brake for a motorcycle, comprising:
a foot brake lever (2),
a foot brake cylinder (13) which can be actuated using the foot brake lever,
a first hydraulic braking device which acts on the rear wheel,
a first duct (14) which connects the foot brake cylinder (13) to the first hydraulic braking device,
a second hydraulic braking device which acts on the front wheel,
a second duct (24) which connects the foot brake cylinder (13) to the second hydraulic braking device, a first pressure sensor (16), which measures the actuating pressure of the first hydraulic braking device,
a second pressure sensor (15), which measures the pressure which the foot brake cylinder (13) generates, a hand brake lever (1),
a hand brake cylinder (4) which can be actuated using the hand brake lever,
a third hydraulic braking device which acts on the front wheel,
a third duct (5) which connects the hand brake cylinder (4) to the third hydraulic braking device,
a pressure modulator (17, 18, 19, 20), which is assigned to the first duct (14),
a pressure modulator (26, 27, 28, 20), which is assigned to the second duct (14), and
an electronic controller, in which an optimum distribution of the braking forces which act on the front and rear wheels is stored,
**characterized in that**
a third pressure sensor (6), which measures the actuating pressure of the third hydraulic braking device, is provided,
a fourth pressure sensor (25), which measures the actuating pressure of the second hydraulic braking device, is provided, and that
in the electronic controller, the theoretical delay values corresponding to the pressures which are generated with the hand brake cylinder (4) or foot brake cylinder (13) and the optimum distribution of the braking forces acting on the front and rear wheels which is required to achieve these theoretical delay values and the braking pressures which are required for this purpose are stored, the electronic controller controlling the two pressure modulators corresponding to the signals which the four pressure sensors (6, 15, 16, 25) supply, to bring the actuation pressures of the first and second hydraulic braking devices to the programmed values when the hand brake lever (1) or foot brake lever (2) is actuated or both brake levers (1 and 2) are actuated simultaneously.

2. Integral brake according to Claim 1, **characterized in that** a pressure modulator (7, 8, 9, 10) is also assigned to the third duct (5), that a rotational speed sensor (12, 29) is assigned in each case to the front and rear wheels, and that the electronic controller controls the three pressure modulators corresponding to the signals which the two rotational speed sensors supply, to prevent blocking of the front or rear wheel.

3. Integral brake according to Claim 2, **characterized in that** the three pressure modulators comprise an inlet valve (17, 26, 7) which is arranged in the first, second and third ducts (14, 24, 5), a duct (18, 27, 8) which bypasses each inlet valve, an outlet valve (19, 28, 9) which is arranged in the bypass duct, and a pump (20, 10) which is arranged in the bypass duct between the outlet valve and the first, second or third duct.

4. Integral brake according to Claim 1, 2 or 3, **characterized in that** two brake discs are fixed to the front wheel, and a brake caliper is assigned to each of them, said brake caliper having three pressure chambers, of which the two outer ones are connected to the third duct (5) and the inner one is connected to the second duct (24).

5. Integral brake according to Claim 1, 2 or 3, **characterized in that** two brake discs are fixed to the front wheel, and a brake caliper is assigned to each of them, said brake caliper having at least one pressure chamber, the pressure chamber(s) of the one brake caliper being connected to the third duct (5), and the pressure chamber(s) of the other brake caliper being connected to the second duct (24).

## Revendications

1. Système de freinage intégral pour motocycle, comprenant :
un levier de frein à pied (2) ;
un cylindre de frein à pied (13) pouvant être actionné à l'aide du levier de frein à pied ;
un premier dispositif de freinage hydraulique agissant sur la roue arrière ;
une première conduite (14) reliant le cylindre de frein à pied (13) au premier dispositif de freinage hydraulique ;
un deuxième dispositif de freinage hydraulique agissant sur la roue avant ;
une deuxième conduite (24) reliant le cylindre de frein à pied (13) au deuxième dispositif de freinage hydraulique ;
un capteur de pression (16) mesurant la pression d'actionnement du premier dispositif de freinage hydraulique ;
un deuxième capteur de pression (15) mesurant la pression générée par le cylindre de frein à pied (13) ;
un levier de frein à main (1) ;
un cylindre de frein à main (4) pouvant être actionné à l'aide du levier de frein à main ;
un troisième dispositif de freinage hydraulique agissant sur la roue avant ;
une troisième conduite (5) reliant le cylindre de frein à main (4) au troisième dispositif de freinage hydraulique ;
un modulateur de pression (17, 18, 19, 20) associé à la première conduite (14) ;
un modulateur de pression (26, 27, 28, 20) associé à la deuxième conduite (24) ; et
un module de commande électronique dans lequel est mémorisée une répartition optimale des forces de freinage s'exerçant sur les roues avant et arrière ;
**caractérisé en ce que**
un troisième capteur de pression (6) mesurant la pression d'actionnement du troisième dispositif de freinage hydraulique est prévu ;
un quatrième capteur de pression (25) mesurant la pression d'actionnement du deuxième dispositif de freinage hydraulique est prévu ; et
dans le module de commande électronique, les valeurs de décalage théoriques correspondant aux pressions produites par le cylindre de frein à main (4) ou par le cylindre de frein à pied (13) ou bien la répartition optimale des forces de freinage agissant sur les roues avant et arrière nécessaire à l'obtention de ces valeurs de décalage théoriques et les pressions de freinage correspondantes sont mémorisées, le module de commande électronique commandant les deux modulateurs de pression en fonction des signaux fournis par les quatre capteurs de pression (6, 15, 16, 25) pour amener les pressions d'actionnement des premier et deuxième dispositifs de freinage hydrauliques aux valeurs programmées en cas d'actionnement du levier de frein à main (1) ou du levier de frein à pied (2) ou d'un actionnement simultané des deux leviers de freinage (1 et 2).

2. Système de freinage intégral selon la revendication 1, **caractérisé en ce qu'**à la troisième conduite (5) est également associé un modulateur de pression (7, 8, 9, 10), que les roues avant et arrière sont respectivement associées à un capteur de comptage des tours (12, 29) et que le module de commande électronique commande les trois modulateurs de pression en fonction des signaux fournis par les deux capteurs de comptage de tours afin d'empêcher un blocage de la roue avant ou de la roue arrière.

3. Système de freinage intégral selon la revendication 2, **caractérisé en ce que** les trois modulateurs de pression comprennent une soupape d'admission (17, 26, 7) disposée dans la première, la deuxième et la troisième conduite (14, 24, 5), une conduite (18, 27, 8) entourant chaque soupape d'admission, une soupape d'échappement (19, 28, 9) disposée dans la conduite enveloppante et une pompe (20, 10) disposée dans la conduite enveloppante entre la soupape d'échappement et la première, la deuxième ou la troisième conduite.

4. Système de freinage intégral selon la revendication 1, 2 ou 3, **caractérisé en ce que** deux disques de freinage sont fixés sur la roue avant, respectivement associés à un étrier de frein présentant trois chambres de pression, les deux chambres extérieures étant reliées à la troisième conduite (5) et la chambre intérieure étant reliée à la deuxième conduite (24).

5. Système de freinage intégral selon la revendication 1, 2 ou 3, **caractérisé en ce que** deux disques de freinage sont fixés sur la roue avant et associés respectivement à un étrier de frein présentant au moins une chambre de pression, la ou les chambres de pression du premier étrier de frein étant reliées à la troisième conduite (5) et la ou les chambres de pression de l'autre étrier de frein étant reliées à la deuxième conduite (24).
